# EUROPEAN PATENT APPLICATION

(11) **EP 4 714 727 A1**
(43) Date of publication of application: **25.03.2026**
(21) Application number: 24202044.4
(22) Date of filing: 23.09.2024
(51) Int. Cl.: B60L 53/14, B60L 53/30, B60L 53/31, B60L 53/35, F21V 33/00

(54) **SERVICE LIGHT FOR ELECTRIC VEHICLE CHARGERS**

(71) Applicant: Nidec SSB Wind Systems GmbH, 48499 Salzbergen (DE)
(72) Inventor: BERTOLOTTI, Fabio, 48455 Bad Bentheim (DE)
(74) Representative: Bossmeyer, Jörg Peter

(57) **Abstract**

An electric vehicle charger (10) having a frame or housing (11) and at least one charging cable (14) for establishing electrical connection to an electric vehicle (2) through a vehicle's charging port, the charging cable (14) ending with a cable plug (4), the electric vehicle charger further having at least one movable and/or extendable arm (20) attached at a first end to the frame or housing (11) and attached at, or in the vicinity of, a second end to the charging cable (14) so as to carry at least part of the cable weight during a movement and/or extension of the movable and/or extendable arm (20) following a pull on the electrical cable (14) during a process of electrical connection, wherein the movable and/or extendable arm (20) has a directed light unit (26) mounted at, or in the vicinity of, the second end of the movable and/or extendable arm (20), the directed light unit (26) providing illumination to an area surrounding the cable plug (4).

## Description

### FIELD OF INVENTION

The present invention relates to a lighting system for electric vehicle chargers. In particular the invention relates to an electric vehicle charger having a frame or housing and at least one charging cable for establishing electrical connection to an electric vehicle through a vehicle's charging port, the charging cable ending with a cable plug, the electric vehicle charger further having at least one movable and/or extendable arm attached at a first end to the frame or housing and attached at, or in the vicinity of, a second end to the charging cable so as to carry at least part of the cable weight during a movement and/or extension of the movable and/or extendable arm following a pull on the electrical cable during a process of electrical connection.

### BACKGROUND OF THE INVENTION

The switch from a fossil-based transportation infrastructure to an electric based one includes the installation of a large number of electric vehicle chargers (EV chargers) along travel routes to recharge the batteries of the electric vehicles. EV chargers typically include a housing having one or more large charging cables for electrically connecting the EV charger to the car. Each charging cable provides one charging point. The EV chargers have an interface through which the customer can perform the transactions necessary to initiate and conduct the charging session, such as, for example, the payment transaction.

When the EV charger is designed to deliver a large amount of power to the vehicle, the charging cable must transmit the electrical power without excessive heating. To avoid large heating losses due to electrical resistance, the charge cable has large conductors leading to an overall large cross-section which, in turn, results in the charging cable being heavy and appreciably stiff. This weight and stiffness increases the customer's difficulty in connecting the vehicle, which includes the step of precisely positioning and aligning the charging cable's ending (i.e. the cable's plug) with the vehicle's own charging port. To alleviate this problem, some EV chargers are now equipped with an extendable arm attached at one end to the EV charger, and attached at the other end to the charging cable so as to carry most of the cable weight as the customer pulls the cable's plug towards the car's charging port and the extendable arm extends in the same direction.

To operate at night, EV chargers have an illuminated interface. When the EV charger is under a large covering, such as a rain canopy, or inside a garage or similar building, and the covering carries its own source of illumination, then the customer has sufficient night-time visibility to perform all the necessary steps in the charging process. These steps include, additionally to the payment transaction, the preparatory steps of parking the electric vehicle in close proximity of the EV charger, and connecting the charging cable to the vehicle. However, a significant portion of EV chargers are being currently installed in areas that lack independent external illumination, leading to insufficient night-time illumination at, and around, the EV charger. Thus, while some manufactures have included some added lighting to further illuminate the interface area, the steps of parking the car in close proximity and of connecting the charging cable to the vehicle remain hampered by poor illumination. Further difficulties arise if the customer accidentally drops keys, wallet, or the like, in the darkness surrounding his or her vehicle.

### OBJECTIVES OF THE INVENTION

Therefore, it is an objective of the present invention to provide an electric vehicle charger that generates sufficient illumination during the charging process. Preferably, it is an additional objective to provide lighting specifically to the area near the vehicle's charge port, so as to facilitate the cable connection step. Preferentially, it is a further objective of this invention to provide a clearly visible signal, both in daytime and night-time, of the free or occupied status of each of the electric vehicle charger's charging points, and associated charging sessions.

### SUMMARY OF INVENTION

The above-mentioned objective is achieved according to the invention by an electric vehicle charger according to claim 1. Preferred developments and/or embodiments of the invention are recited in the dependent claims and described in the following specification.

For an electric vehicle charger having a frame or housing and at least one charging cable for establishing electrical connection to an electric vehicle through a vehicle's charging port, the charging cable ending with a cable plug, the electric vehicle charger further having at least one movable and/or extendable arm attached at a first end to the frame or housing and attached at, or in the vicinity of, a second end to the charging cable so as to carry at least part of the cable weight during a movement and/or extension of the movable and/or extendable arm following a pull on the electrical cable during a process of electrical connection. According to the invention the movable and/or extendable arm has a directed light unit mounted at, or in the vicinity of, the second end of the movable and/or extendable arm. In particular, the directed light unit provides illumination or broad illumination to the area surrounding the cable plug and/or the vehicle's charge port.

Preferably, the expression "at least one" also has the meaning of "one". In particular, the electric vehicle charger can also be referred to as an electric vehicle charging station. The directed light unit can also be referred to as a directed lighting unit, for example. In particular, the directed light can also be referred to as concentrated light.

Preferably, the electric vehicle charger comprises a control unit. In particular, the operation of the electric vehicle charger is controllable by the control unit. Advantageously, the directed light unit is controllable by the control unit.

Preferably, the electric vehicle charger is operable to charge the batterie of an electric vehicle. Preferentially, the process of charging the battery of the or an electric vehicle is controllable by the control unit. The process of charging the battery of the or an electric vehicle is also referred to as charging process or charging, for example.

Preferably, the electric vehicle charger comprises an interface. In particular, the interface is for interaction and communication with a human. Advantageously, the interface is an illuminated interface. Preferentially, the interface comprises at least one input device and/or at least one output device. The interface comprises a touch screen, for example. In particular, the interface is connected to the control unit.

Preferably, as an additional service to the customer, a diffuse light unit or indicator light is located at or near, or in the vicinity of, the second end or tip of the movable and/or extendable arm. In particular, the diffuse light unit or indicator light provides diffuse illumination visible in the surrounding space of the electric vehicle charger. Advantageously, the diffuse light unit or indicator light is controllable by the control unit. Preferably, the illumination is controlled by the electric vehicle charger and/or by the control unit to indicate the state of charging. Most preferably, the indication is made via the colour of the light emitted, whereby the light emitting a first colour indicates that the charging is possible and available, and a second colour indicating that charging is in progress. Most preferably, a third colour indicates that the charging process has been interrupted due to some technical issues. Placement of the diffuse light unit or indicator light at, or in the vicinity of, the second end of the movable and/or extendable arm provides better visibility from a distance, such as the visibility present in an electric vehicle approaching the electric vehicle charger from a lateral or rearward direction with respect to the front of the electric vehicle charger. The diffuse light unit or indicator light can also be referred to as a diffuse lighting unit or indicator light unit, for example.

Preferentially, the diffuse light unit or indicator light is operable to emit light of different, and selectable, colours. In particular, the diffuse light unit or indicator light is operable to generate a diffuse light volume. Advantageously, the diffuse light unit or indicator light is operable to emit an intermittent light.

According to a preferred embodiment the movable and/or extendable arm has a tip enclosure, the tip enclosure comprising the directed light unit. Preferably, the tip enclosure is a cylindrical tip enclosure. In particular, the tip enclosure is mounted at, or in the vicinity of, the second end of the movable and/or extendable arm. Preferentially, the tip enclosure comprises the diffuse light unit or indicator light.

Preferably, the directed light unit is operable to produce a downward or predominantly downward light cone. Preferentially, the electric vehicle charger and/or the control unit is operable to select the intensity of the directed light.

Preferably, the electric vehicle charger and/or the control unit is operable to activate the directed light unit when the movable and/or extendable arm starts to move and/or extend. Preferentially, the electric vehicle charger and/or the control unit is operable to activate the directed light unit when a direct-light activation command is entered via the interface.

Advantageously, the movable and/or extendable arm is composed of straight rods connected by hinges.

### BRIEF DESCRIPTION OF THE DRAWINGS

Further features, properties and advantages of the present invention will become clear by the following description of a preferred embodiment of the invention with reference to the accompanying drawings.
- FIG. 1: shows a typical electric vehicle connected to an electric vehicle charger according to a preferred embodiment of the invention;

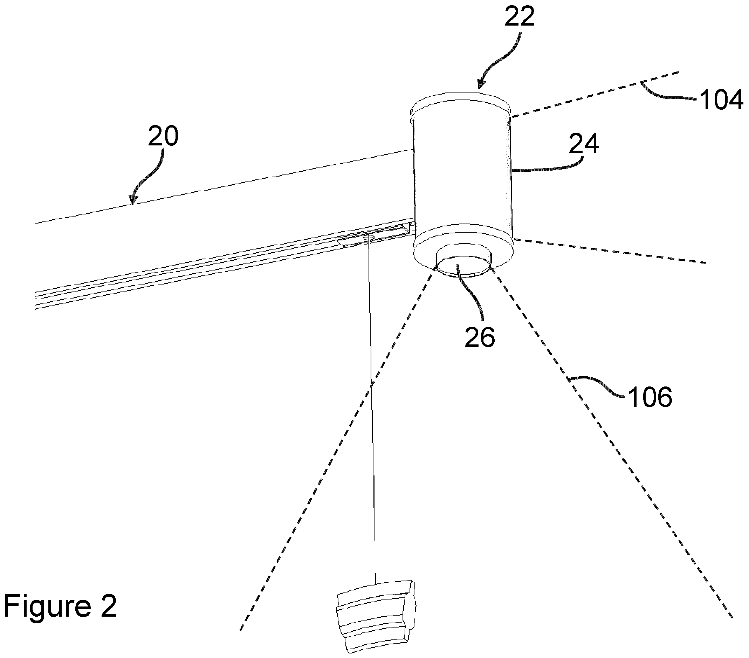

- FIG. 2: shows components of the preferred embodiment associated with a directed light unit and a diffuse light unit; and
- FIG. 3: shows the electric vehicle under illumination from the directed light unit of the electric vehicle charger according to the preferred embodiment.

### DETAILED DESCRIPTION OF INVENTION

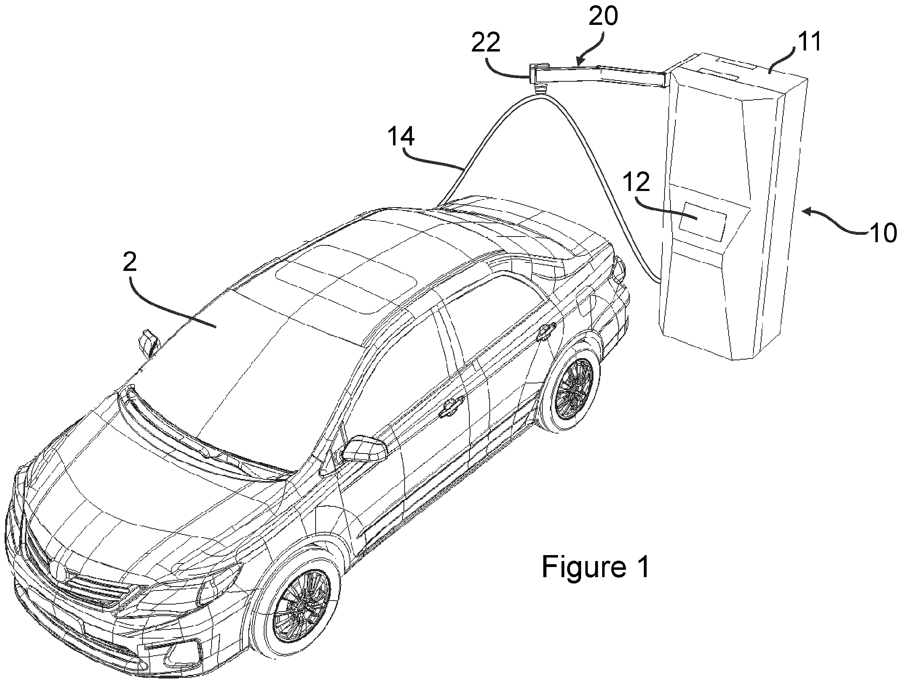

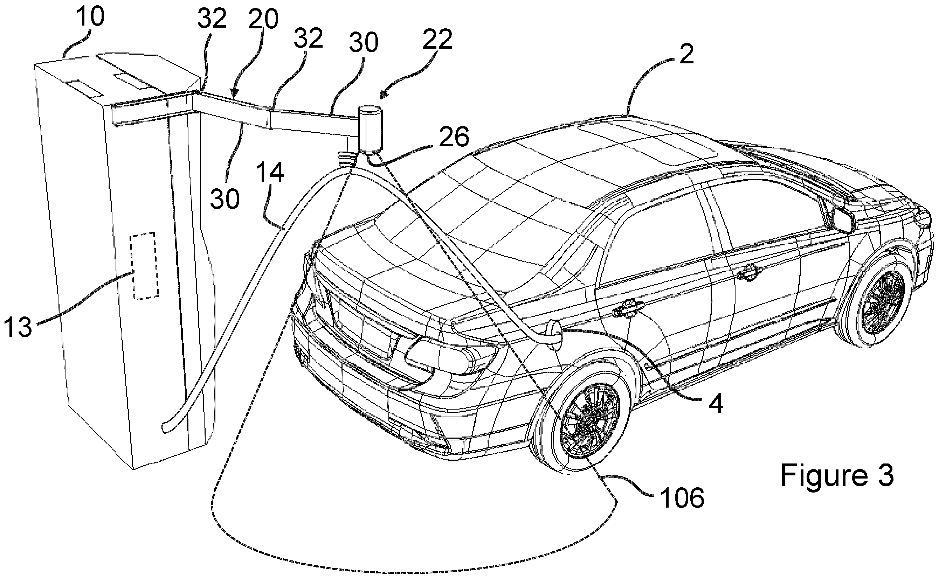

In reference to figure 1, an electric vehicle 2 is electrically connected via a charging cable 14 to an electric vehicle charger 10. In reference to figure 3, the charging cable 14 ends with a cable plug 4 that connects to the vehicle's charging port, located under the cable plug 4 in figure 3, hence not visible in the figure.

The electric vehicle charger 10 has an interface 12 for interaction and communication with a human. When the electric vehicle charger is designed to deliver a large amount of power to the vehicle 2, the charging cable 14 must transmit the electrical power without excessive heating. To avoid large heating losses due to electrical resistance, the charge cable 14 has large conductors leading to an overall large cross-section which, in turn, results in the charging cable 14 being heavy and appreciably stiff.

A movable and/or extendable arm 20 has a first end attached to a frame or housing 11 of electric vehicle charger 10 and a second end that can be easily extend away from the frame or housing 11. The charging cable 14 is attached at, or near, the second end of the movable and/or extendable arm 20. The movable and/or extendable arm 20 can be composed, for example, of straight rods 30 connected by hinges 32, as shown in the figure, or composed of telescoping rods that extend linearly. Also known in the art is a movable and/or extendable arm composed of a large spring enclosing the charging cable, which bends, rather than extends, towards the vehicle. These examples of movable and/or extendable arms are well known to the industry. As the customer pulls the charging cable's plug 4 towards the vehicle's charging port, the force in the charging cable 14 pulls and extends the movable and/or extendable arm 20 in the direction towards the vehicle's charge port. Therefore, by virtue of the attachment of the charging cable 14 to the movable and/or extendable arm 20, the movable and/or extendable arm 20 carries at least part of the charging cable weight during a movement and/or extension of the movable and/or extendable arm and the following process of electrical connection. Preferably, the electric vehicle charger 10 comprises a control unit 13 (shown schematically in figure 3). In particular, the operation of the electric vehicle charger 10 is controllable by the control unit 13. Preferentially, the control unit 13 is connected to the interface 12.

The movable and/or extendable arm 20 is further characterized in having a tip enclosure 22. In the case of a spring-based movable and/or extendable arm, the tip enclosure becomes a circumferential enclosure surrounding the end of the spring. The tip enclosure 22 comprises a directed light unit 26. The directed light unit 26 produces a predominantly downward light cone 106. The directed light unit 26 is controlled by electric vehicle charger 10 and/or by control unit 13. Such control includes, for example, activation of the directed light unit 26 when the movable and/or extendable arm 20 begins its movement and/or extension. It also includes, for example, activation following a request of the vehicle's operator, which may itself come, for example, via the interface 12. We note that the operator may request to activate the directed light unit 26 for reasons other than charging, such as, for example, the illumination of the ground around the electric vehicle charger and car to aid the recovery of a lost object.

When the movable and/or extendable arm 20 moves and/or extends, the light cone 106 moves towards the vehicle's charging port, thereby bringing illumination to the vehicle's charging port. This illumination aids the vehicle's operator in the process of inserting the cable plug 4 into the vehicle's charge port in night-time conditions.

Most preferentially, the intensity of the directed light 26 can be selected by the electric vehicle charger. When the electric vehicle charger is located in, or near, residential zones, the intensity of the light can be lowered when so requested by the rules or by the inhabitants of the zone. Most preferentially, the colour of the light can be pre-selected to produce a desired spectrum, such as the spectrum of warm light, when so required by the zoning laws.

In the preferred embodiment of the invention, the tip enclosure 22 further has a diffuse light unit 24 that generates a diffuse light volume 104. The diffuse light volume 104 is designed to be visible from many different directions with respect to the frame or housing 11. The activation of the diffuse light unit 24 is made for signaling purposes. Most preferentially, the diffuse light unit 24 can emit light with different, and selectable, colours. The combination of activation and colour is used to broadcast predetermined signals to the surrounding of the charger, which may contain other electric vehicles searching for a freely available, and operational, charge point. For example, the diffuse light can be activated in a green colour to signal that the charge point is free, operational, and available, while activation with a blue colour signals that the charge point is currently charging, and, hence, occupied. An intermittent blue light can signify to an operator who has left the immediate premises of the electric vehicle charger, that the charging process is nearly terminated. A yellow light can be used, for example, to signify that the electrical connection between the electric vehicle charger and the vehicle is not successful.

### List of reference numbers

- 2: electric vehicle
- 4: charging cable's plug
- 10: electric vehicle charger
- 11: frame or housing
- 12: interface
- 13: control unit
- 14: charging cable
- 20: movable and/or extendable arm
- 22: tip enclosure
- 24: diffuse light unit
- 26: directed light unit
- 30: rod
- 32: hinge
- 104: diffuse light volume
- 106: downward light cone

## Claims

1. An electric vehicle charger (10) having a frame or housing (11) and at least one charging cable (14) for establishing electrical connection to an electric vehicle (2) through a vehicle's charging port, the charging cable (14) ending with a cable plug (4), the electric vehicle charger further having at least one movable and/or extendable arm (20) attached at a first end to the frame or housing (11) and attached at, or in the vicinity of, a second end to the charging cable (14) so as to carry at least part of the cable weight during a movement and/or extension of the movable and/or extendable arm (20) following a pull on the electrical cable (14) during a process of electrical connection, **characterized in that** the movable and/or extendable arm (20) has a directed light unit (26) mounted at, or in the vicinity of, the second end of the movable and/or extendable arm (20), the directed light unit (26) providing illumination to an area surrounding the cable plug (4).

2. The electric vehicle charger according to claim 1, **characterized in** a diffuse light unit (24) mounted at, or in the vicinity of, the second end of the movable and/or extendable arm (20), the diffuse light unit (24) providing diffuse illumination visible in the surrounding space of the electric vehicle charger (10).

3. The electric vehicle charger according to claim 2, **characterized in that** the diffuse light unit (24) is operable to emit light of different, and selectable, colours.

4. The electric vehicle charger according to claim 2 or 3, **characterized in that** the diffuse light unit (24) is operable to generate a diffuse light volume (104).

5. The electric vehicle charger according to any of the claims 2 to 4, **characterised in that** the diffuse light unit (24) is operable to emit an intermittent light.

6. The electric vehicle charger according to any of the preceding claims, **characterised in that** the extendable arm (20) has a tip enclosure (22), the tip enclosure (22) comprising the directed light unit (26).

7. The electric vehicle charger according to claim 6, **characterised in that** the tip enclosure (22) is mounted at, or in the vicinity of, the second end of the movable and/or extendable arm (20).

8. The electric vehicle charger according to claim 6 or 7 and according to any of the claims 2 to 4, **characterised in that** the tip enclosure (22) comprises the diffuse light unit (24).

9. The electric vehicle charger according to any of the preceding claims, **characterized in that** the directed light unit (26) is operable to produce a downward light cone (106).

10. The electric vehicle charger according to any of the preceding claims, **characterized in that** the electric vehicle charger (10) is operable to select the intensity of the directed light.

11. The electric vehicle charger according to any of the preceding claims, **characterized in that** the electric vehicle charger (10) is operable to activate the directed light unit (26) when the movable and/or extendable arm (20) starts to move and/or extend.

12. The electric vehicle charger according to any of the preceding claims, **characterized in that** the electric vehicle charger (10) comprises an interface (12) for interaction and communication with a human, wherein the electric vehicle charger (10) is operable to activate the directed light unit (26) when a direct-light activation command is entered via the interface (12).

13. The electric vehicle charger according to any of the preceding claims, **characterized in that** the movable and/or extendable arm (20) is composed of straight rods (30) connected by hinges (32).
